# EUROPEAN PATENT SPECIFICATION

(11) **EP 1 759 970 B1**
(45) Date of publication and mention of the grant of the patent: **04.04.2012**
(21) Application number: 06018352.2
(22) Date of filing: 01.09.2006
(51) Int. Cl.: B62K 11/04, F02M 35/16, F02M 35/10

(54) **Straddle-type vehicle**
Grätschsitz-Fahrzeug
Véhicule du type monté à califourchon

(30) Priority: 01.09.2005 JP 2005253512
(43) Date of publication of application: 07.03.2007
(73) Proprietor: Yamaha Hatsudoki Kabushiki Kaisha, Shizuoka-ken Shizuoka 438-8501 (JP)
(72) Inventor: Iwanaga, Sadamu c/o Yamaha Hatsudoki Kabushiki Kaisha, Shizuoka-ken 438-8501 (JP)
(74) Representative: Grünecker, Kinkeldey, Stockmair & Schwanhäusser

(56) References cited:
- EP-A- 1 314 635
- JP-A- 58 188 720
- JP-A- 61 075 019
- US-A1- 2004 129 467

## Description

The present invention relates to a straddle-type vehicle, according to the preamble of independent claim 1.

Currently, a motorcycle having a cowling for covering the front part of the vehicle body includes a cooling structure which ventilates the inside of the cowling using airflow produced by running of the vehicle. By this structure, a fuel tank located above an engine and components inside the cowling are not warmed by heat generated from the engine and a radiator.

A conventional vehicle body cooling structure for a motorcycle of this type has been disclosed in JP 2694905 (pp 2-3, Fig. 1), for example. The vehicle body cooling structure according to said document adopts a structure for introducing airflow produced by running of the vehicle through an air introduction opening formed at the front end of a cowling into a space between an engine and a fuel tank inside the cowling.

According to the known vehicle body cooling structure, relatively low-temperature airflow produced by running of the vehicle is introduced through the air introduction opening toward a position below the bottom of the fuel tank or its vicinity. Then, the airflow is discharged with air warmed by a radiator and the engine to the rear outside of the vehicle body.

In addition, a conventional motorcycle typically uses a heat insulator attached to the lower surface of a fuel tank so as to prevent transmission of heat generated from an engine to the fuel tank.

According to the vehicle body cooling structure disclosed in JP 2694905, however, there is a possibility that the lower surface of the fuel tank is warmed when the amount of the airflow is decreased in such a case that the vehicle is running at a low speed. In this case, the temperature increase of the fuel tank can be reduced to some extent by attaching heat insulator to the lower surface of the fuel tank. However, even in the structure having the insulator, the entire lower part of the fuel tank including the heat insulator is heated to a high temperature when the vehicle runs at a low speed for a long period.

Additionally, according to the known vehicle body cooling structure, relatively high-temperature air existing near the engine rises due to negative pressure created behind a wind screen at the time of high-speed running. In this case, it is possible that the high-temperature air increases the temperature of the lower surface of the fuel tank.

Moreover, other motorcycles are known with cooling air passages. Such vehicles are for example depicted in EP 1 314 635 which discloses a straddle-type vehicle according to the preamble of claim 1, in which a cooling air passage is provided In form of a partition wall covering an engine from an upside. The wind is guided from the front Intake opening into the cover body.

A cooling air path is known from US 2004/129467 A1 in which cooling air is guided to the engine under a guide means.

Another vehicle comprises a heat insulating plate (cf. JP 61075019), which separates an upper and lower part of the vehicle.

The invention has been developed to solve the above problems. It is an object of the invention to provide a straddle-type vehicle capable of preventing contact between a fuel tank and air warmed by a radiator and an engine.

This objective is solved in an inventive manner by a straddle-type vehicle according to claim 1.

Preferably, the cooling air passage extending between the engine and the fuel tank is arranged in a front-and-rear direction.

Further, preferably the vehicle body cover covers the front part of the vehicle body including the engine.

Yet further, preferably the heat blocking member covers the upper part of the engine.

According to a preferred embodiment, the straddle-type vehicle comprises a pair of left and right head lights provided at a central portion of a front end of the vehicle body cover in a vehicle width direction.

According to a further preferred embodiment, the straddle-type vehicle further comprises air introduction ports provided on a front surface of the vehicle body cover, wherein the fuel tank side cooling air passage communicates with the air introduction ports.

Preferably, the air introduction ports include first air introduction ports, which are open to the right side of the right head light and to the left side of the left head light.

Further, preferably the head lights are positioned substantially at the same level as that of the fuel tank in a height direction, and upper and lower edges of the first air introduction ports are located substantially at the same positions as those of upper and lower edges of the head lights.

Yet further, preferably the air introduction ports include second air introduction ports disposed above the head lights.

Beneficially, the vehicle body cover includes a front cowling, and an air introduction duct for guiding airflow produced by running of the vehicle and introduced through the second air introduction ports into the front cowling is provided on the front cowling above the head lights.

Further, beneficially a pair of left and right tank rails are provided, the fuel tank is mounted on the tank rails, air introduction paths extending from the first air introduction ports toward the rear are provided at both ends in the vehicle width direction within the vehicle body cover, and the rear ends of the air introduction paths extend toward a clearance for introducing cooling air formed between the tank rails and the fuel tank.

Yet further, beneficially a head pipe and a pair of left and right tank rails extending from the head pipe are provided, the fuel tank is mounted on the tank rails, and a cooling air introduction hole penetrating through the tank rails in a front-and-rear direction of the vehicle body is formed in the vicinity of a portion of the tank rails to be connected with the head pipe.

In the following, the present invention is explained in greater detail with respect to several embodiments thereof in conjunction with the accompanying drawings, wherein:
- Fig. 1: is a side view of a motorcycle including a vehicle body cooling structure according to an embodiment,
- Fig. 2: is an enlarged cross-sectional view showing a main part,
- Fig. 3: is a cross-sectional view taken along a line III-III in Fig. 2,
- Fig. 4: is a front view of a cowling,
- Fig. 5: is a right side view of the cowling,
- Fig. 6: is a left side view of the cowling,
- Fig. 7: is a cross-sectional view showing a structure of an upstream area of a fuel tank side cooling air passage,
- Fig. 8: is a plan view of a heat blocking member,
- Fig. 9: is a side view of the heat blocking member,
- Fig. 10: is a plan view of a separating member,
- Fig. 11: is a side view of the separating member,
- Fig. 12: is a perspective view showing a condition of the heat blocking member attached to a vehicle body frame,
- Fig. 13: is a perspective view showing a structure of front ends of tank rails,
- Fig. 14: is a side view of a side cowl,
- Fig. 15: is a perspective view showing a condition of the separating member attached to the vehicle body frame,
- Fig. 16: is a side view of a side visor, and
- Fig. 17: is a cross-sectional view of the side visor taken along a line XVII-XVII in Fig. 16.

Description of Reference Numerals and Signs:
- 1: motorcycle
- 2: vehicle body cooling structure
- 3: cowling
- 7: fuel tank
- 10: engine
- 11: head light
- 13: front cowling
- 14: side cowling 23 vehicle body frame
- 27: radiator
- 41: head pipe
- 42: tank rail
- 44: cooling air introduction hole
- 51: heat blocking member
- 52: cooling air passage
- 53: engine side cooling air passage
- 54: fuel tank side cooling air passage
- 55: separating member
- 56: lower passage
- 57: upper passage
- 61: first air introduction port
- 62: air introduction path
- 64: air introduction duct
- 65: second air introduction port
- S2: clearance

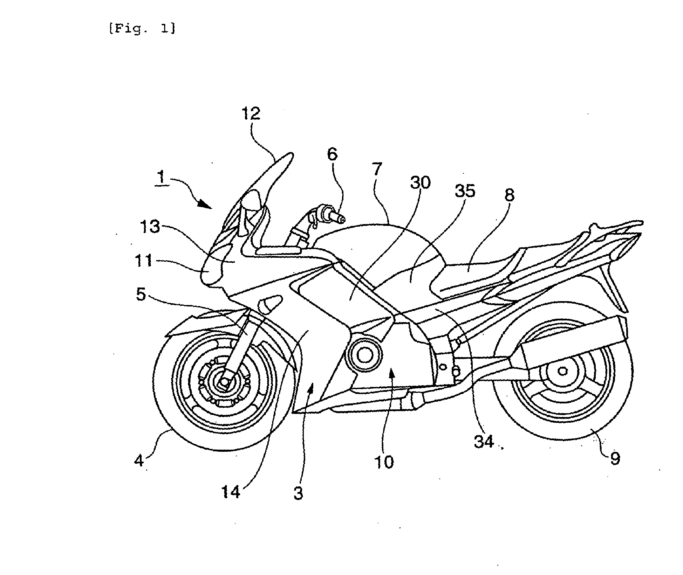

A vehicle body cooling structure for a motorcycle in an embodiment is hereinafter described in detail with reference to Figs. 1 through 18.

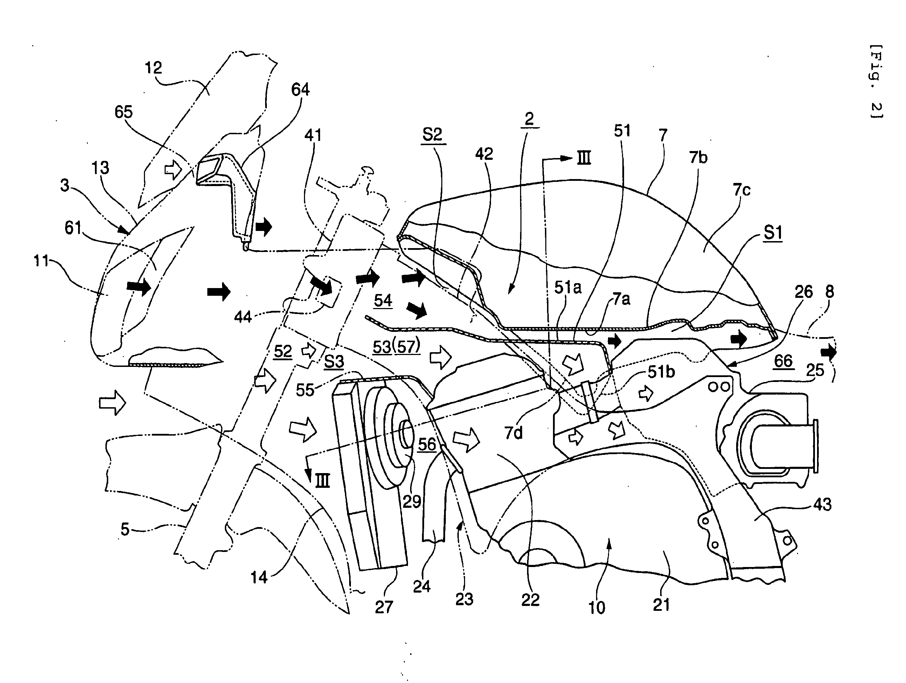

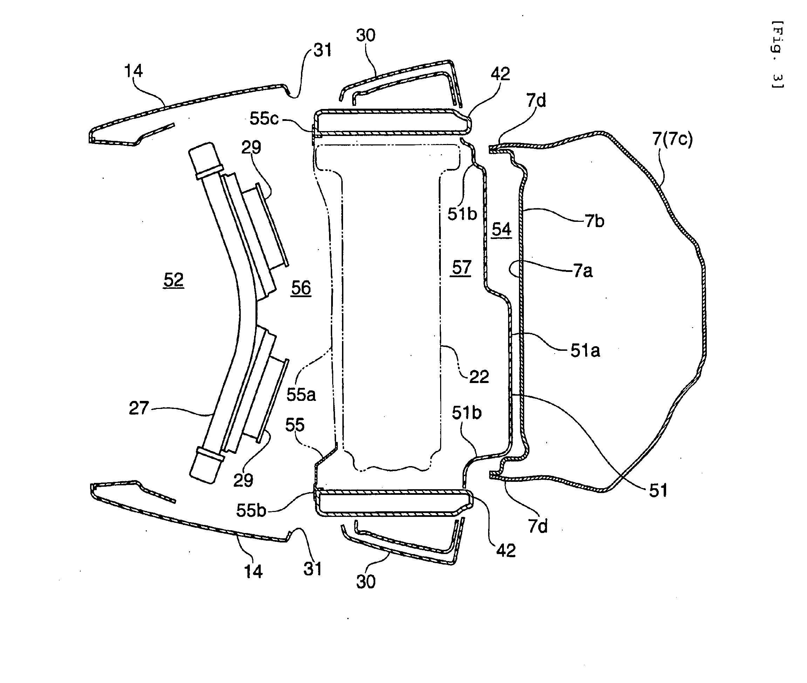

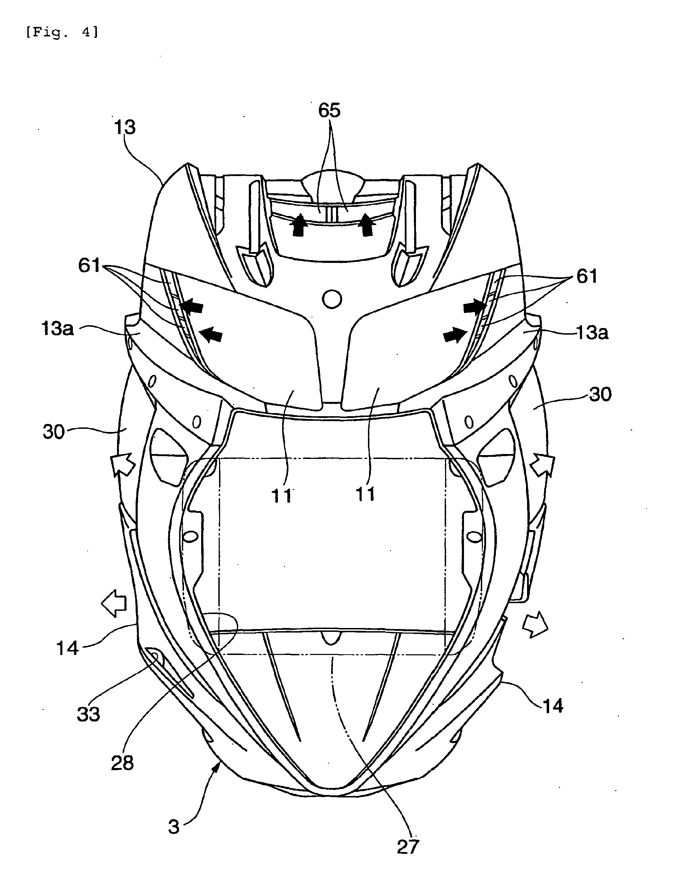

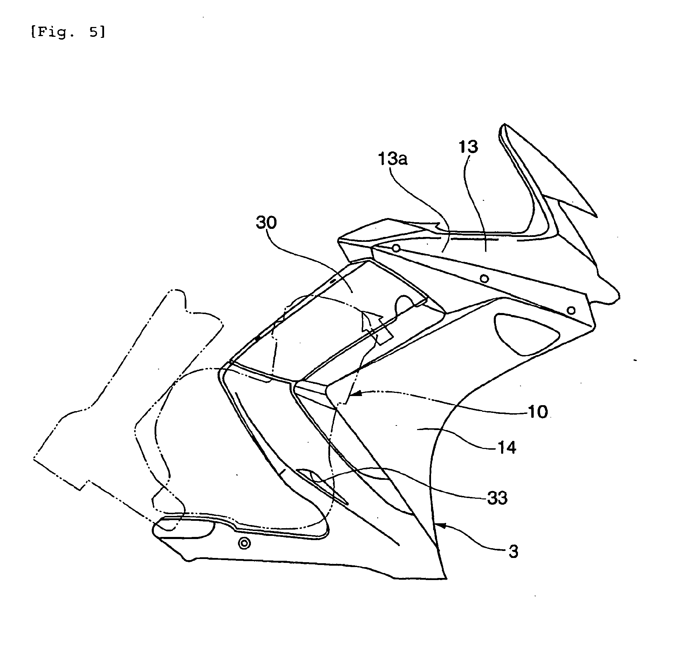

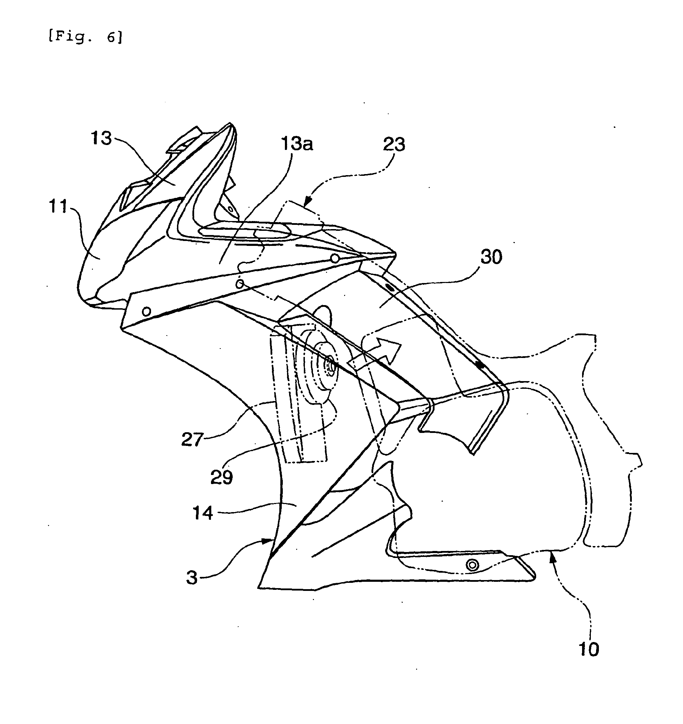

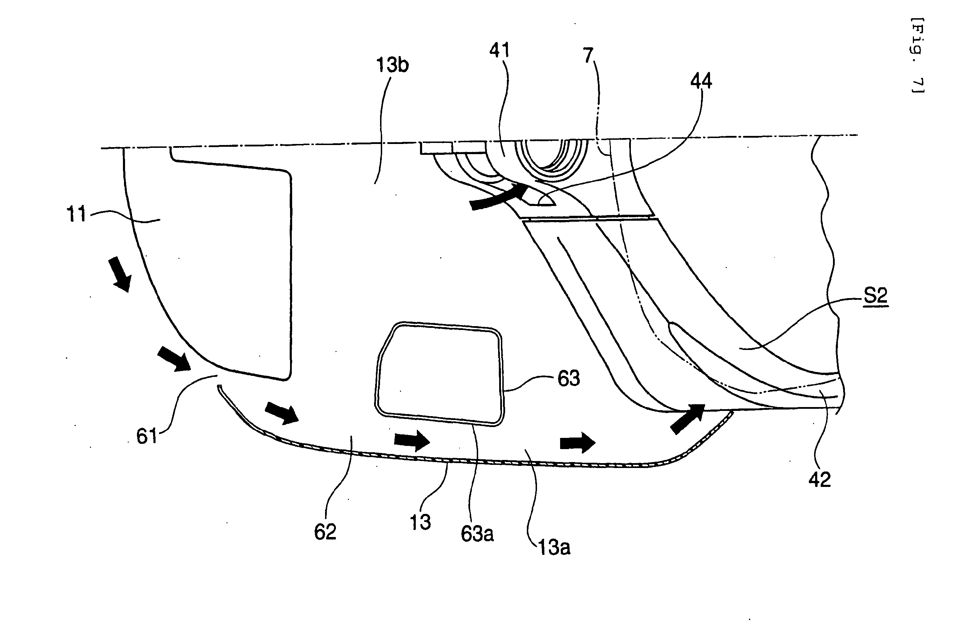

Fig. 1 is a side view of a motorcycle including a cooling structure for a vehicle body according to the embodiment. Fig. 2 is an enlarged cross-sectional view showing a main part. Fig. 3 is a cross-sectional view taken along a line III-III in Fig. 2. Fig. 4 is a front view of a cowling. Fig. 5 is a right side view of the cowling. Fig. 6 is a left side view of the cowling. Fig. 7 is a cross-sectional view showing a structure of an upstream area of a fuel tank side cooling air passage.

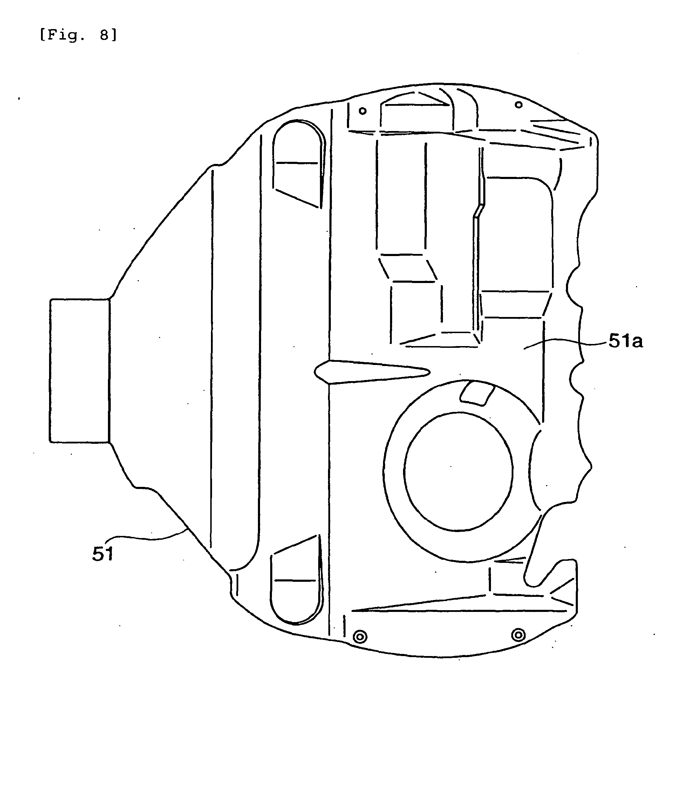

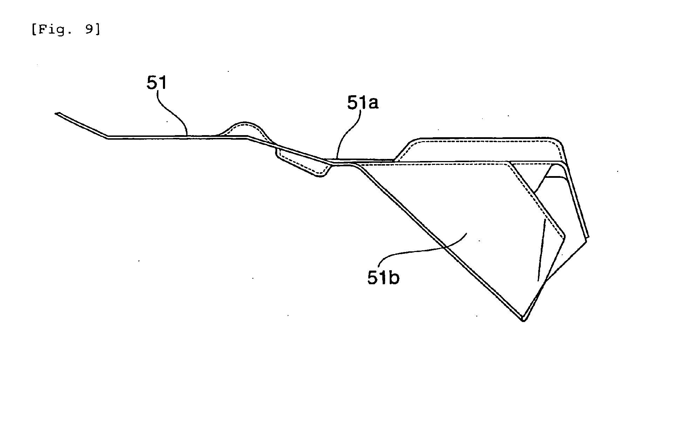

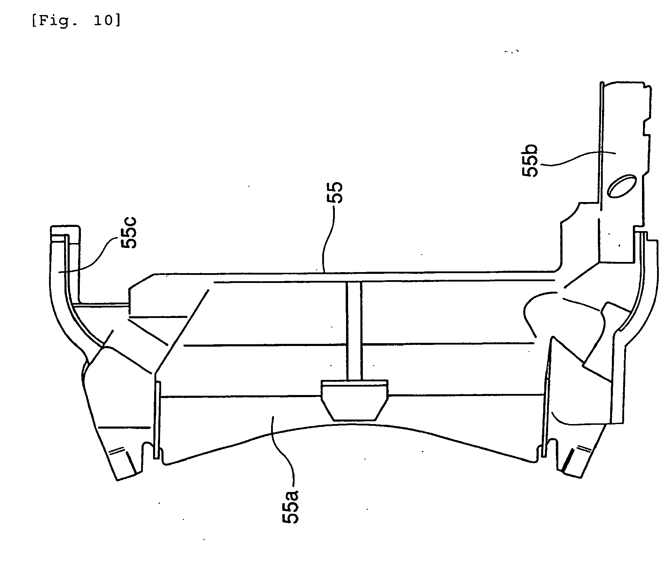

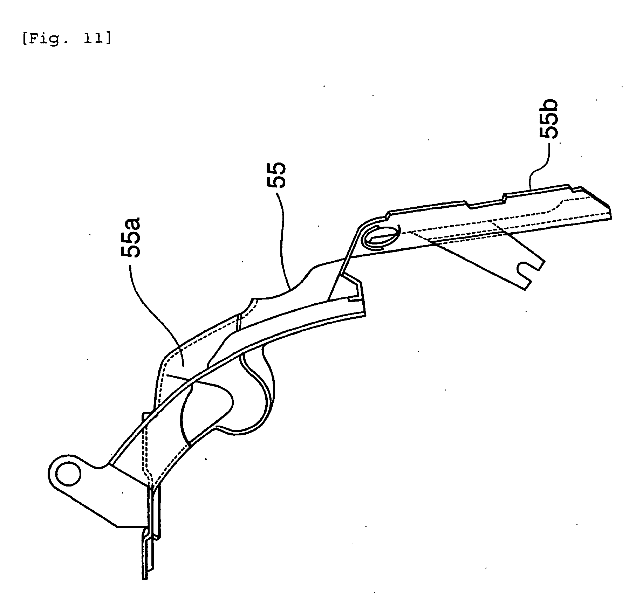

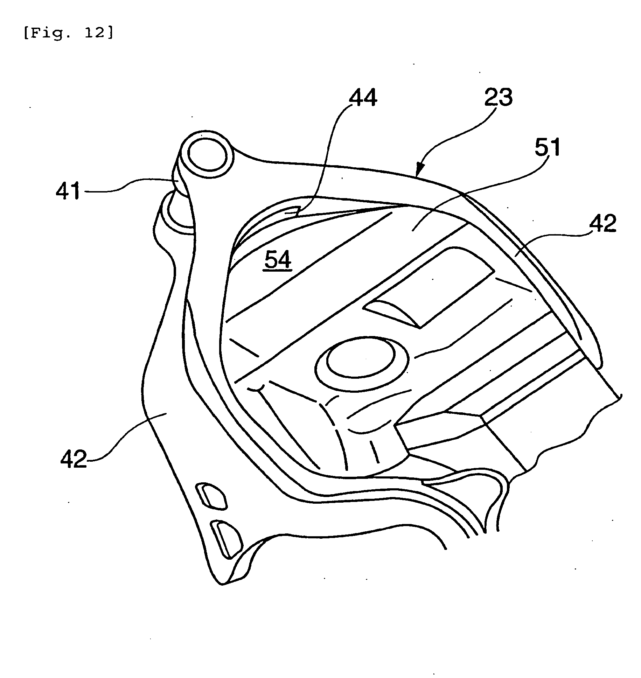

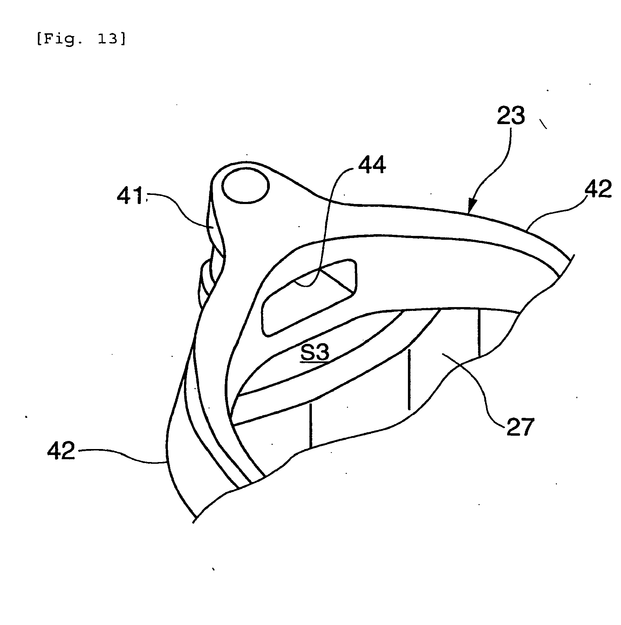

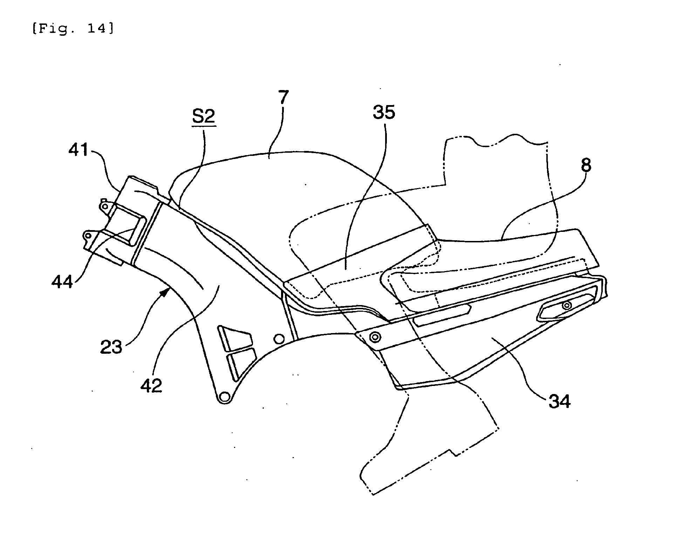

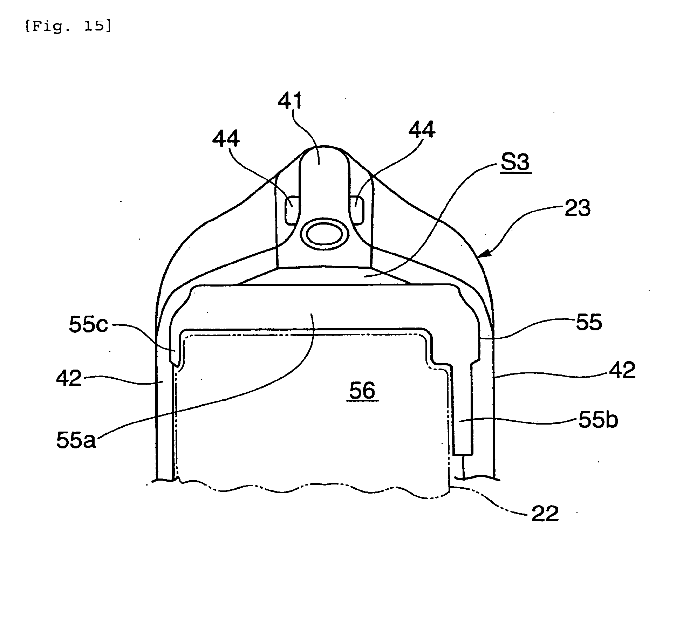

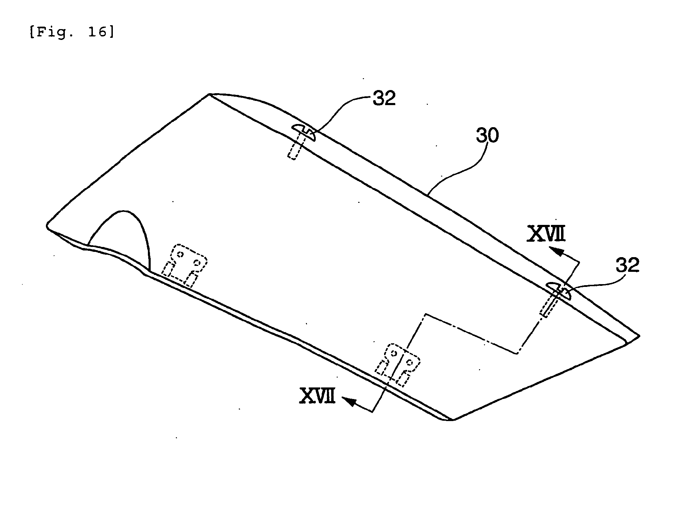

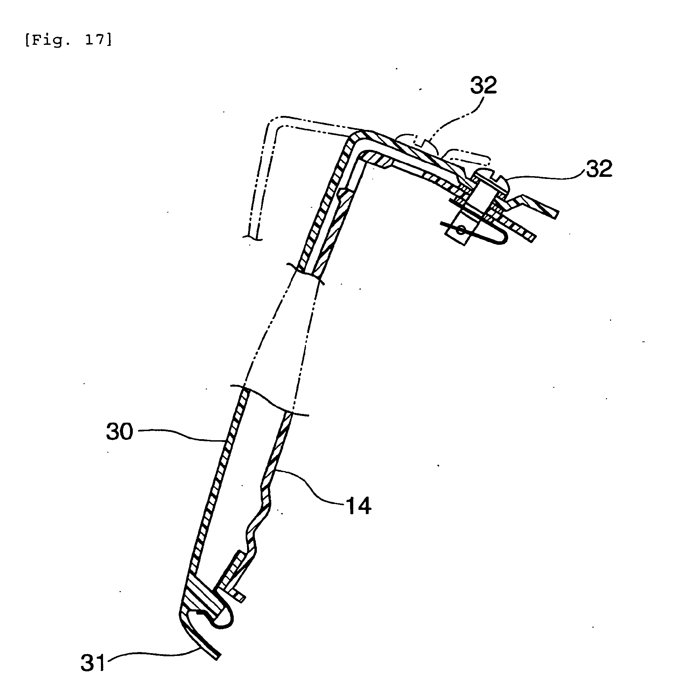

Fig. 8 is a plan view of a heat blocking member. Fig. 9 is a side view of the heat blocking member. Fig. 10 is a plan view of a separating member. Fig. 11 is a side view of the separating member. Fig. 12 is a perspective view showing a condition of the heat blocking member attached to a vehicle body frame. Fig. 13 is a perspective view showing a structure of front ends of tank rails. Fig. 14 is a side view of a side cowl. Fig. 15 is a perspective view showing a condition of the separating member attached to the vehicle body frame. Fig. 16 is a side view of a side visor. Fig. 17 is a cross-sectional view of the side visor taken along a line XVII-XVII in Fig. 16.

In these figures, a motorcycle 1 including a vehicle body cooling structure 2 (see Fig. 2) in this embodiment is shown. The motorcycle 1 is a so-called on-road-type motorcycle having a cowling 3 for covering the front part of the vehicle body. In Fig. 1, a front wheel 4, a front fork 5, steering handlebars 6, a fuel tank 7, a seat 8, a rear wheel 9, and an engine 10 are shown.

As illustrated in Figs. 4 through 6, the cowling 3 is constituted by a front cowling 13 which surrounds a pair of left and right head lights 11, 11 and has a wind screen 12 (see Figs. 1 and 2), a pair of left and right side cowlings 14, 14 extending downward from the lower end of the front cowling 13, and other parts. The cowling 3 forms a vehicle body cover according to the embodiment. As illustrated in Fig. 4, the head lights 11 are disposed at the front end and central portion of the front cowling 13 in the vehicle width direction. As illustrated in Figs. 1 and 2, the head lights 11 are located substantially at the same level as that of the fuel tank 7 in the height direction.

The engine 10 is a water cooling type 4-cycle multi-cylinder engine. As illustrated in Fig. 2, the engine 10 has a crank case 21 and a cylinder 22 attached to the end of the front part of the crank case 21 with respect to the vehicle body, and is mounted on a vehicle body frame 23. The cylinder 22 extends diagonally upward to the front from the crank case 21, and is covered by the cowling 3 from the sides.

An exhaust pipe 24 is connected to the front part of the cylinder 22, while an air intake device 26 having an air cleaner 25 is connected to the rear part of the cylinder 22. A radiator 27 is disposed approximately in front of the exhaust pipe 24. The air cleaner 25 is interposed between the rear part of the crank case 21 and the fuel tank 7. A clearance S1 through which air flows is formed between the upper surface of the air cleaner 25 and a lower surface 7a of the fuel tank 7.

As illustrated in Fig. 3, the radiator 27 has a V-shape which is open to the front with respect to the vehicle body in the plan view. As shown in Fig. 4, the radiator 27 is located behind a front opening 28 of the cowling 3. As can be seen from Fig. 3, a pair of electrically powered fans 29 are provided behind the radiator 27 such that the fans 29 are opposed to each other in the vehicle width direction. As shown in Fig. 3, the axes of the fans 29 are gradually inclined outward in the vehicle width direction to the rear of the vehicle. Thus, the fans 29 discharge air warmed by the radiator 27 diagonally sideward to the rear.

As indicated by white arrows in Figs. 4 through 6, air discharged from the fans 29 passes through openings 31 (see Fig. 3) formed between the side cowlings 14 of the cowling 3 and side visors 30 to flow to the outside of the cowling 3. As illustrated in Figs. 16 and 17, the side visors 30 are components separated from the side cowlings 14, and supported by the side cowlings 14 such that the side visors 30 can swing in the vehicle width direction around the ends of the openings 31.

As shown in Fig. 17, the inclination angle of the side visors 30 in the vertical direction can be switched between a first position at which the upper ends of the side visors 30 approach the side cowlings 14 as the inner position in the vehicle width direction and a second position at which the upper ends of the side visors 30 come to the position indicated by an alternate long and two short dashes line as the outer position in the vehicle width direction, by changing the tightening positions of fixing bolts 32 at the upper ends of the side visors 30. When the side visors 30 are located at the first position, airflow produced by running of the vehicle can easily contact the legs of the rider, eliminating discomfort caused by heat generated from the engine 10 in summer. When the side visors 30 are at the second position, the airflow does not easily reach the legs of the rider, preventing the legs of the rider from being cooled by the ram air in winter.

According to the motorcycle in this embodiment, a ventilation hole 33 (see Figs. 4 and 5) for eliminating discomfort of the rider caused by heat from the engine 10 is provided at the lower right part of the side cowling 14 with respect to the vehicle body. In addition, as illustrated in Fig. 14, heat insulating members 35 are equipped on side covers 34 covering the lower part of the seat 8 from the sides. The hole 33 is located in front of the right toe of the rider so as to introduce the airflow produced by running of the vehicle toward the right toe.

The insulating members 35 of the side covers 34 are made of plastic material, and are disposed below the fuel tank 7 to cover both sides of the fuel tank 7 from the sides in the vehicle width direction as illustrated in Fig. 14. Thus, the legs of the rider come to contact not with the lower part of the fuel tank 7 whose temperature is easily increased to a relatively high temperature, but with the heat insulating members made of material having low thermal conductivity.

As can be seen from Figs. 2, 7, and 12 through 15, the vehicle body frame 23 for supporting the engine 10 includes a head pipe 41 supporting the front fork 5 such that the front fork 5 can freely rotate, a pair of left and right tank rails 42, 42 extending diagonally downward to the rear from the head pipe 41, a rear arm bracket 43 provided at the rear ends of the tank rails 42, and other components.

As illustrated in Fig. 2, the tank rails 42 cover the cylinder 22 from the sides, and support the fuel tank 7. Thus, the fuel tank 7 is mounted on the tank rails 42.

As shown in Figs. 7, 12, 13, and 15, a cooling air introduction hole 44 penetrating through the tank rails 42 in the front-and-rear direction of the vehicle body is formed at the front ends of the tank rails 42 to be connected with the head pipe 41, that is, a portion of the vehicle body frame 23 in the vicinity of both sides of the head pipe 41.

As shown in Fig. 2, the fuel tank 7 has an inside member 7b constituting the bottom of the fuel tank 7, and an outside member 7c whose lower end opening is closed by the inside member 7b. The fuel tank 7 is positioned above the engine 10. As can be seen from Figs. 2 and 14, a clearance S2 through which air flows is formed between the front end of the fuel tank 7 and the tank rails 42. The clearance S2 forms a cooling air introduction clearance according to the embodiment.

As illustrated in Figs. 2 and 3, a heat blocking member 51 constituting a part of the vehicle body cooling structure 2 in this embodiment is disposed between the fuel tank 7 and the engine 10.

The vehicle body cooling structure 2 separates a cooling air passage 52 as a space formed between the fuel tank 7 and the engine 10 into upper and lower parts by the heat blocking member 51, and forms a heat insulated space on the fuel tank 7 side.

As shown in Figs. 8 and 9, the heat blocking member 51 is a plate-shaped plastic component constituted by a main plate 51 a extending in the horizontal direction and side plates 51 b extending downward from both ends of the main plate 51 a in the vehicle width direction. As illustrated in Fig. 12, the heat blocking member 51 is supported by the tank rails 42 via not-shown stays while inserted between the pair of the left and right tank rails 42, 42. In this embodiment, the front end of the heat blocking member 51 is positioned above the radiator 27 as shown in Fig. 2. As can be seen from Figs. 8 and 12, the heat blocking member 51 has a plan-view shape similar to the inside plan-view shape of the pair of tank rails 42, 42, and the width of the heat blocking member 51 in the vehicle width direction gradually decreases toward the front of the vehicle body (left side in Fig. 8).

More specifically, as illustrated in Fig. 2, the heat blocking member 51 extends from above the radiator 27 to the front end of the air cleaner 25 in the front-and-rear direction of the vehicle body, and also extends from the tank rail 42 in the left part of the vehicle body to the tank rail 42 in the right part of the vehicle body in the vehicle width direction. The heat blocking member 51 having this shape is inserted between the tank rails 42, 42 to cover the cylinder 22 and the front end of the crank case 21 from above. With the heat blocking member 51 attached at this position, the main plate 51 a comes opposed to the lower surface 7a of the fuel tank 7, and both sides 7d (see Fig. 2) extending downward from both ends of the fuel tank 7 in the vehicle width direction come opposed to the side plate 51 b of the heat blocking member 51.

When the fuel tank 7 is placed on the tank rails 42 to which the heat blocking member 51 is attached to the tank rail 42 in the manner described above, the space between the fuel tank 7 and the engine 10 (cooling air passage 52) is separated into upper and lower parts by the heat blocking member 51. Thus, by attaching the heat blocking member 51, the cooling air passage 52 formed between the fuel tank 7 and the engine 10 is separated into an engine side cooling air passage 53 at the relatively lower position and a fuel tank side cooling air passage 54 positioned above the engine side cooling air passage 53.

The engine side cooling air passage 53 is produced around the engine 10 with walls of the pair of the left and right tank rails 42, the heat blocking member 51, and other components. The engine side cooling air passage 53 introduces airflow, which is produced by running of the vehicle and flows from the front opening 28 of the cowling 3 into the cowling 3, toward the radiator 27 and the engine 10 as cooling air. In this embodiment, a separating member 55 for separating the space between the upper end of the radiator 27 and the upper end of the cylinder 22 into the upper and lower parts is provided. Thus, a lower passage 56 positioned below the separating member 55 and an upper passage 57 positioned above the separating member 55 are defined in the upstream area of the engine side cooling air passage 53.

As illustrated in Figs. 10 and 11, the separating member 55 is a plate-shaped component made of plastic material. More specifically, the separating member 55 has a main plate 55a extending between the radiator 27 and the cylinder 22 in the front-and-rear direction of the vehicle body and also extending along the radiator 27 from one end to the other end in the vehicle width direction, and seal members 55b and 55c extending downward from both ends of the main plate 55a. As shown in Fig. 15, the seal members 55b and 55c close the clearance between the tank rails 42 and the cylinder 22 from the front.

According to the vehicle body cooling structure 2 having the separating member 55, substantially all the amount of the air passing through the radiator 27 and contacting the front surface of the cylinder 22 within the lower passage 56 flows toward the sides of the cylinder 22 since the upper area is closed by the separating member 55. As a result, the airflow flowing through the lower passage 56 is discharged chiefly through lower (center) discharge ports on the side cowlings 14.

As illustrated in Figs. 2, 13 and 15, the airflow produced by running of the vehicle and flowing through the front opening 28 into the cowling 3 and passing above the radiator 27 goes through a clearance S3 formed between the separating member 55 (radiator 27) and the vehicle body frame 23 and flows toward below the heat blocking member 51. Then, the airflow cools the upper end and the sides of the cylinder 22 and passes between the cowling 3 and the side covers 34 to be discharged to the outside of the vehicle body.

The front area of the fuel tank side cooling air passage 54 formed above the heat blocking member 51 is defined by the heat blocking member 51 as the bottom and the tank rails 42 as the side walls as shown in Fig. 12. Thus, air flows into the fuel tank side cooling air passage 54 chiefly through the clearance S2 between the tank rails 42 and the fuel tank 7 and through the cooling air introduction hole 44 on the tank rails 42. As can be seen from Fig. 7, the clearance S2 communicates with both ends 13a in the vehicle width direction within the front cowling 13, and the cooling air introduction hole 44 communicates with a central portion 13b in the vehicle width direction within the front cowling 13.

As illustrated in Fig. 7, air introduction paths 62 extending toward the rear from first air introduction ports 61 formed on the front surface of the front cowling 13 are positioned at the both ends 13a in the vehicle width direction within the front cowling 13. As shown in Fig. 4, the first air introduction ports 61 are open to the front of the vehicle body at the boundaries between both sides of the head lights 11 and the front cowling 13, i.e., on both sides of the head lights 11. As can be seen from Figs. 2 and 4, the upper ends and lower ends of the first air introduction ports 61 are so determined as to be substantially at the same positions as those of the upper and lower ends of the head lights 11.

As illustrated in Fig. 7, the air introduction paths 62 are produced by the inner surface of the front cowling 13, vertical walls 63a of housing boxes 63, or other components equipped within the front cowling 13. The rear ends of the air introduction paths 62 extend toward the clearance S2.

Airflow produced by running of the vehicle is introduced through an air introduction duct 64 shown in Fig. 2 into the central portion 13b in the vehicle width direction within the front cowling 13. The air introduction duct 64 is disposed above the head lights 11 provided at the center of the front cowling 13 in the vehicle width direction. The air introduction duct 64 introduces airflow produced by running of the vehicle through second air introduction ports 65 (see Fig. 4) formed in the upper region of the front cowling 13 into the front cowling 13.

As illustrated in Fig. 4, the second air introduction ports 65 are disposed at the center of the front surface of the front cowling 13 in the vehicle width direction and above the head lights 11, and directed to the front of the vehicle body. Thus, the fuel tank side cooling air passage 54 communicates with the space in front of the vehicle body via the clearance S2, the cooling air introduction hole 44, the inside of the front cowling 13, and the first and second air introduction ports 61 and 65.

The rear end, i.e., the downstream end of the fuel tank side cooling air passage 54 communicates with a rear space 66 (see Fig. 2) surrounded by the seat 8 and the side covers 34. Thus, the airflow having reached the rear end of the fuel tank side cooling air passage 54 passes through the rear space 66 to be discharged to the rear of the vehicle body.

According to the motorcycle 1 which includes the vehicle body cooling structure 2 discussed above, airflow produced by running of the vehicle is introduced through the front opening 28 and the first and second air introduction ports 61 and 65, and then flows into each of the engine side cooling air passage 53 and the fuel tank side cooling air passage 54 when the vehicle is running. In Fig. 2, the air flowing through the engine side cooling air passage 53 is indicated by white arrows, while the air passing through the fuel tank side cooling air passage 54 is indicated by black arrows. Since the engine side cooling air passage 53 and the fuel tank side cooling air passage 54 are separated from each other by the heat blocking member 51, neither the air flowing through the cooling air passage 53 nor the air flowing through the cooling air passage 54 flows from one cooling air passage to the other cooling air passage.

According to the vehicle body cooling structure 2 in this embodiment, therefore, relatively high-temperature air near the engine 10 passes through the engine side cooling air passage 53 to be discharged to the outside of the vehicle body. Thus, the fuel tank 7 can be cooled by air flowing through the fuel tank side cooling air passage 54 which is separated from the engine side cooling air passage 53 at the time of running of the vehicle.

When the vehicle is running at a low speed or stops running for a long period with the engine operating, air inside the fuel tank side cooling air passage 54 can function as thermal insulator. Accordingly, temperature increase of the lower surface of the fuel tank 7 can be prevented even in these cases.

According to the vehicle body cooling structure 2 in this embodiment, relatively low-temperature airflow can be efficiently introduced through the first and second air introduction ports 61 and 65 of the front cowling 13 into the fuel tank side cooling air passage 54.

According to the vehicle body cooling structure 2 in this embodiment, the head lights 11 are provided at the front end and the central portion of the front cowling 13 in the vehicle width direction, and the air introduction ports 61 are open to both sides of the head lights 11. Thus, the vehicle body cooling structure 2 can efficiently introduce cooling air into the first air introduction ports 61.

According to the vehicle body cooling structure 2 in this embodiment, the head lights 11 are disposed substantially at the same level as that of the fuel tank 7 in the height direction, and the upper and lower ends of the first air introduction ports 61 are located substantially at the same positions as those of the upper and lower ends of the head lights 11. In the vehicle body cooling structure 2, therefore, the first air introduction ports 61 can be positioned at the same level as that of the head lights 11, and thus the difference in height between the first air introduction ports 61 and the fuel tank 7 can be reduced. Accordingly, the vehicle body cooling structure 2 can smoothly introduce a large volume of relatively low-temperature airflow produced by running of the vehicle toward the lower surface of the fuel tank 7 and its vicinity.

According to the vehicle body cooling structure 2 in this embodiment, the head lights 11 are disposed at the front end and the central portion of the front cowling 13 in the vehicle width direction, and the second air introduction ports 65 are provided above the head lights. Accordingly, the vehicle body cooling structure 2 can introduce cooling air into the second air introduction ports 65 and thus can increase the amount of introduced air.

According to the vehicle body cooling structure 2 in this embodiment, the air introduction duct 64 for introducing airflow produced by running of the vehicle and guided through the second air introduction ports 65 into the front cowling 13 is provided on the front cowling 13 above the head lights 11. In the vehicle body cooling structure 2, therefore, airflow can be introduced through the air introduction duct 64 toward the back of the front cowling 13, and thus negative pressure is not created behind the wind screen 12 at the time of high-speed running. Accordingly, there is no possibility that relatively high-temperature air near the engine 10 rises due to negative pressure existing at the back of the screen in the vehicle body cooling structure 2, and thus the lower surface of the fuel tank 7 is kept at a relatively low temperature.

According to the vehicle body cooling structure 2 in this embodiment, the air introduction paths 62 extending from the first air introduction ports 61 toward the rear are provided at both ends in the vehicle width direction within the vehicle body cover 3, and the rear ends of the air introduction paths 62 extend toward the clearance S2 for introducing cooling air formed between the tank rails 42 and the fuel tank 7. In the vehicle body cooling structure 2, therefore, airflow produced by running of the vehicle directly contacts the lower surface of the fuel tank 7.

According to the vehicle body cooling structure 2 in this embodiment, the cooling air introduction hole 44 penetrating through the tank rails 42 in the front-and-rear direction of the vehicle body is formed in the vicinity of the portion of the tank rails 42 to be connected with the head pipe 41. In the vehicle body cooling structure 2, therefore, airflow produced by running of the vehicle contacts the central portion of the lower surface of the fuel tank 7 in the vehicle width direction.

According to the vehicle body cooling structure 2 in this embodiment, the radiator 27 is equipped before the engine 10, and the front end of the heat blocking member 51 is positioned above the radiator 27. In the vehicle body cooling structure 2, therefore, air having passed through the radiator 27 does not flow into the fuel tank side cooling air passage 54. Accordingly, only relatively low-temperature airflow can be supplied to the fuel tank side cooling air passage 54.

According to the vehicle body cooling structure 2 in this embodiment, the separating member 55 for separating the space between the upper end of the radiator 27 and the upper part of the engine 10 into the upper and lower parts is provided, and the engine side cooling air passage 53 has the lower passage 56 positioned below the separating member 55 and the upper passage 57 positioned above the separating member 55. In the vehicle body cooling structure 2, therefore, relatively high-temperature airflow having passed through the radiator 27 is supplied to the lower passage 56 of the engine side cooling air passage 53, and relatively low-temperature air entering from the space between the radiator 27 and the heat blocking member 51 flows through the upper passage 57. Since the temperature of the air within the upper passage 57 is relatively low, the temperature of the air within the fuel tank side cooling air passage 54 adjacent to the upper passage 57 can be kept further lower.

The motorcycle 1 including the vehicle body cooling structure 2 in this embodiment can efficiently cool the lower surface of the fuel tank 7 using airflow produced by running of the vehicle. The motorcycle 1 can also prevent temperature increase of the lower surface of the fuel tank 7 when the vehicle stops running.

The description above discloses, according to a preferred first aspect (amongst others), an embodiment of a vehicle body cooling structure for a motorcycle which includes an engine, a fuel tank disposed above the engine, a radiator is provided before the engine, a cooling air passage extending between the engine and the fuel tank in the front-and-rear direction, and a vehicle body cover covering the front part of the vehicle body including the engine, and a heat blocking member for separating the cooling air passage into an engine-side cooling air passage and a fuel tank-side air passage, a separating member for separating a space between an upper end of the radiator and an upper part of the engine into upper and lower parts, and the engine side cooling air passage includes a lower passage positioned below the separating member and an upper passage positioned above the separating member, wherein the front end of the heat blocking member is positioned above the radiator.

Further, according to a preferred second aspect, there is disclosed a vehicle body cooling structure for a motorcycle, wherein air introduction ports are provided on the front surface of the vehicle body cover, and the fuel tank side cooling air passage communicates with the air introduction ports.

Further, according to a preferred third aspect, there is disclosed a vehicle body cooling structure for a motorcycle, wherein head lights are provided at the central portion of the front end of the vehicle body cover in the vehicle width direction, and the air introduction ports include first air introduction ports which are open to both sides of the head lights.

Further, according to a preferred fourth aspect, there is discloses a vehicle body cooling structure for a motorcycle, wherein the head lights are positioned substantially at the same level as that of the fuel tank in the height direction, and the upper and lower edges of the first air introduction ports are located substantially at the same positions as those of the upper and lower edges of the head lights.

Further, according to a preferred fifth aspect, there is disclosed a vehicle body cooling structure for a motorcycle, wherein head lights are provided at the central portion of the front end of the vehicle body cover in the vehicle width direction, and the air introduction ports include second air introduction ports disposed above the head lights.

Further, according to a preferred sixth aspect, there is disclosed a vehicle body cooling structure for a motorcycle, wherein the vehicle body cover includes a front cowling, and an air introduction duct for guiding airflow produced by running of the vehicle and introduced through the second air introduction ports into the front cowling is provided on the front cowling above the head lights.

Further, according to a preferred seventh aspect, there is disclosed a vehicle body cooling structure for a motorcycle, wherein a pair of left and right tank rails are provided, a fuel tank is mounted on the tank rails, air introduction paths extending from the first air introduction ports toward the rear are provided at both ends in the vehicle width direction within the vehicle body cover, and the rear ends of the air introduction paths extend toward a clearance for introducing cooling air formed between the tank rails and the fuel tank.

Further, according to a preferred eighth aspect, there is disclosed a vehicle body cooling structure for a motorcycle, wherein a head pipe and a pair of left and right tank rails extending from the head pipe are provided, the fuel tank is mounted on the tank rails, and a cooling air introduction hole penetrating through the tank rails in the front-and-rear direction of the vehicle body is formed in the vicinity of a portion of the tank rails to be connected with the head pipe.

Further, according to a preferred ninth aspect, there is disclosed a vehicle body cooling structure for a motorcycle, wherein a radiator is provided before the engine, and the front end of the heat blocking member is positioned above the radiator.

Further, according to a preferred tenth aspect, there is disclosed a vehicle body cooling structure for a motorcycle, wherein a separating member for separating a space between the upper end of the radiator and the upper part of the engine into upper and lower parts is provided, and the engine side cooling air passage includes a lower passage positioned below the separating member and an upper passage positioned above the separating member.

Further, according to a preferred eleventh aspect, there is disclosed a motorcycle including the vehicle body cooling structure for a motorcycle according to any one of the first to seventh aspects.

Thus, in order to achieve the above object, there is disclosed a vehicle body cooling structure for a motorcycle according to the embodiment, which includes an engine, a fuel tank disposed above the engine, a cooling air passage extending between the engine and the fuel tank in the front-and-rear direction, and a vehicle body cover covering the front part of the vehicle body including the engine has a heat blocking member covering the upper part of the engine. The cooling air passage is separated into an engine side cooling air passage and a fuel tank side cooling air passage by the heat blocking member.

According to a vehicle body cooling structure for a motorcycle, according to the second preferred aspect, air introduction ports are provided on the front surface of the vehicle body cover, and the fuel tank side cooling air passage communicates with the air introduction ports in the vehicle body cooling structure for a motorcycle according to the first preferred aspect.

According to a vehicle body cooling structure for a motorcycle, according to the third preferred aspect, head lights are provided at the central portion of the front end of the vehicle body cover in the vehicle width direction, and the air introduction ports include first air introduction ports which are open to both sides of the head lights in the vehicle body cooling structure for a motorcycle according to the second preferred aspect.

According to a vehicle body cooling structure for a motorcycle, according to the fourth preferred aspect, the head lights are positioned substantially at the same level as that of the fuel tank in the height direction, and the upper and lower edges of the first air introduction ports are located substantially at the same positions as those of the upper and lower edges of the head lights in the vehicle body cooling structure for a motorcycle according to the third preferred aspect.

According to a vehicle body cooling structure for a motorcycle, according to the fifth preferred aspect, head lights are provided at the central portion of the front end of the vehicle body cover in the vehicle width direction, and the air introduction ports include second air introduction ports disposed above the head lights in the vehicle body cooling structure for a motorcycle according to the second preferred aspect.

According to a vehicle body cooling structure for a motorcycle, according to the sixth preferred aspect, the vehicle body cover includes a front cowling, and an air introduction duct for guiding airflow produced by running of the vehicle and introduced through the second air introduction ports into the front cowling is provided on the front cowling above the head lights in the vehicle body cooling structure for a motorcycle according to the fifth preferred aspect.

According to a vehicle body cooling structure for a motorcycle, according to the seventh preferred aspect, a pair of left and right tank rails are provided, a fuel tank is mounted on the tank rails, air introduction paths extending from the first air introduction ports toward the rear are provided at both ends in the vehicle width direction within the vehicle body cover, and the rear ends of the air introduction paths extend toward a clearance for introducing cooling air formed between the tank rails and the fuel tank in the vehicle body cooling structure for a motorcycle according to the third preferred aspect.

According to a vehicle body cooling structure for a motorcycle, according to the eighth preferred aspect, a head pipe and a pair of left and right tank rails extending from the head pipe are provided, the fuel tank is mounted on the tank rails, and a cooling air introduction hole penetrating through the tank rails in the front-and-rear direction of the vehicle body is formed in the vicinity of a portion of the tank rails to be connected with the head pipe in the vehicle body cooling structure for a motorcycle according to the third preferred aspect.

According to a vehicle body cooling structure for a motorcycle, according to the ninth preferred aspect, a radiator is provided before the engine, and the front end of the heat blocking member is positioned above the radiator in the vehicle body cooling structure for a motorcycle according to the first preferred aspect.

According to a vehicle body cooling structure for a motorcycle, according to the tenth preferred aspect, a separating member for separating a space between the upper end of the radiator and the upper part of the engine into upper and lower parts is provided, and the engine side cooling air passage includes a lower passage positioned below the separating member and an upper passage positioned above the separating member in the vehicle body cooling structure for a motorcycle according to the sixth preferred aspect.

A motorcycle according to the eleventh preferred aspect includes the vehicle body cooling structure for a motorcycle according to any one of the first to seventh preferred aspects.

According to all of the above embodiments, in particular the first preferred aspect, relatively high-temperature air near the engine passes through the engine side cooling air passage and is discharged to the outside of the vehicle body. Thus, the fuel tank can be cooled by airflow produced by running of the vehicle and passing through the fuel tank side cooling air passage which is separated from the engine side cooling air passage at the time of running.

When the vehicle is running at a low speed or stopped for a long period with the engine operating, air within the fuel tank side cooling air passage functions as a heat insulator. Thus, temperature increase of the lower surface of the fuel tank can be prevented.

According to the vehicle body cooling structure in the second aspect, relatively low-temperature airflow produced by running of the vehicle can be efficiently introduced through the first and second air introduction ports of the vehicle body cover into the fuel tank side cooling air passage. Thus, the lower surface of the fuel tank can be kept at a further lower temperature.

According to the vehicle body cooling structure in the third aspect, cooling air can be efficiently introduced into the first air introduction ports.

According to the vehicle body cooling structure in the fourth aspect, the first air introduction ports can be positioned at the same level as that of the head lights. Thus, the difference in height between the air introduction ports and the fuel tank can be reduced. Accordingly, a large volume of relatively low-temperature airflow produced by running of the vehicle can be smoothly introduced toward the lower surface of the fuel tank or its vicinity.

According to the vehicle body cooling structure in the fifth aspect, cooling air can be introduced into the second air introduction ports. Thus, the volume of introduced air can be increased.

According to the vehicle body cooling structure in the sixth aspect, the air introduction duct can introduce airflow produced by running of the vehicle toward the back of the front cowling. Thus, creation of negative pressure behind a wind screen at the time of high-speed running can be prevented. Since relatively high-temperature air near the engine does not rise due to negative pressure behind the screen, the lower surface of the fuel tank can be kept at a relatively low temperature.

According to the vehicle body cooling structure in the seventh aspect, airflow produced by running of the vehicle directly contacts the lower surface of the fuel tank. Thus, the lower surface of the fuel tank can be efficiently cooled.

According to the vehicle body cooling structure in the eighth aspect, airflow produced by running of the vehicle contacts the central portion of the lower surface of the fuel tank in the vehicle width direction. Thus, the lower surface of the fuel tank can be effectively cooled.

According to the vehicle body cooling structure in the ninth aspect, air having passed through the radiator does not flow into the fuel tank side cooling air passage. Thus, only relatively low-temperature airflow produced by running of the vehicle can be introduced into the fuel tank side cooling air passage.

According to the vehicle body cooling structure in the tenth aspect, relatively high-temperature airflow produced by running of the vehicle and passing through the radiator flows through the lower passage of the engine side cooling air passage, and relatively low-temperature air entering from the space between the radiator and the heat blocking member flows through the upper passage of the engine side cooling air passage. Accordingly, relatively low-temperature air is supplied to the upper passage, and thus air within the fuel tank side cooling air passage adjacent to the upper passage can be kept at a low temperature.

The motorcycle provided according to the eleventh aspect can efficiently cool the lower surface of the fuel tank by airflow produced by running of the vehicle, and prevent temperature increase of the lower surface of the fuel tank when the vehicle stops running.

The description above discloses in order to provide a vehicle body cooling structure for a motorcycle and a motorcycle, which are capable of preventing contact between a fuel tank and air warmed by a radiator and an engine, an embodiment of a vehicle body cooling structure for a motorcycle which includes a cooling air passage 52 extending between an engine 10 and a fuel tank 7 in the front-and-rear direction, and a cowling 3 for covering the front part of the vehicle body containing the engine 10. The vehicle body cooling structure also includes a heat blocking member 51 for covering the upper part of the engine 10. The cooling air passage 52 is separated into an engine side cooling air passage 53 and a fuel tank side cooling air passage 54 by the heat blocking member 51. The separating member 55 separates a space between an upper end of the radiator and an upper part of the engine 10 into upper and lower parts. The engine side cooling air passage 53 includes a lower passage 56 positioned below the separating member 55 and an upper passage 57 positioned above the separating member 55. The radiator 27 is provided before the engine 10. and the front end of the heat blocking member 51 is positioned above the radiator 27.

## Claims

1. Straddle-type vehicle including an engine (10), a fuel tank (7) disposed above the engine (10), a radiator (27) which is provided in front of the engine (10), and a vehicle body cover (3) covering a front part of a vehicle body (23), wherein a cooling air passage (52) is provided, which extends between the engine (10) and the fuel tank (7), and a heat blocking member (51) for separating the cooling air passage (52) into an engine-side cooling air passage (53) and a fuel tank-side air passage (54), wherein a front end of the heat blocking member (51) is positioned above the radiator (27),
**characterized by**
a separating member (55) for separating a space between an upper end radiator (27) and an upper part of the engine (10) into upper and lower parts, and in that the engine side cooling air passage (53) includes a lower passage (56) positioned below the separating member (55) and an upper passage (57) positioned above the separating member (55).

2. Straddle-type vehicle according to claim 1, **characterized in that** the cooling air passage (52) extending between the engine (10) and the fuel tank (7) is arranged in a front-and-rear direction of the vehicle.

3. Straddle-type vehicle according to claim 1 or 2, **characterized in that** the vehicle body cover (3) covers the front part of the vehicle body (23) including the engine (10).

4. Straddle-type vehicle according to one of the claims 1 to 3, **characterized in that** the heat blocking member (51) covers the upper part of the engine (10).

5. Straddle-type vehicle according to one of the claims 1 to 4, **characterized by** a pair of left and right head lights (11) provided at a central portion of a front end of the vehicle body cover (3) in a vehicle width direction.

6. Straddle-type vehicle according to one of the claims 1 to 5, **characterized by** air introduction ports provided on a front surface of the vehicle body cover (3), wherein the fuel tank side cooling air passage (54) communicates with the air introduction ports.

7. Straddle-type vehicle according to claims 5 and 6, **characterized in that** the air introduction ports include first air introduction ports (61), which are open to the right side of the right head light (11) and to the left side of the left head light (11).

8. Straddle-type vehicle according to claim 7, **characterized in that** the head lights (11) are positioned substantially at the same level as that of the fuel tank (7) in a height direction of the vehicle, and upper and lower edges of the first air introduction ports (61) are located substantially at the same positions as those of upper and lower edges of the head lights (11).

9. Straddle-type vehicle according to claims 5 to 8, **characterized in that** the air introduction ports include second air introduction ports (65) disposed above the head lights (11).

10. Straddle-type vehicle according to claim 9, **characterized in that** the vehicle body cover (3) includes a front cowling (13), and an air introduction duct (64) for guiding airflow produced by running of the vehicle and introduced through the second air introduction ports (65) into the front cowling (13) is provided on the front cowling (13) above the head lights (11).

11. Straddle-type vehicle according to one of the claims 7 to 10, **characterized in that** a pair of left and right tank rails (42) are provided, the fuel tank (7) is mounted on the tank rails (42), air introduction paths (62) extending from the first air introduction ports (61) toward the rear are provided at both ends in the vehicle width direction within the vehicle body cover (3), and the rear ends of the air introduction paths (62) extend toward a clearance (52) for introducing cooling air formed between the tank rails (42) and the fuel tank (7).

12. Straddle-type vehicle according to one of the claims 1 to 11, **characterized in that** a head pipe (41) and a pair of left and right tank rails (42) extending from the head pipe (4) are provided, the fuel tank (7) is mounted on the tank rails (42), and a cooling air introduction hole (44) penetrating through the tank rails (42) in a front-and-rear
direction of the vehicle body (23) is formed in the vicinity of a portion of the tank rails (42) to be connected with the head pipe (41).

## Patentansprüche

1. Grätschsitzfahrzeug, umfassend einen Motor (10), einen Benzingtank (7), der oberhalb des Motors (10) angeordnet ist, einen Lüfter (27), welcher vor dem Motor (10) angeordnet ist, und eine Fahrzeugkarosserieverkleidung (3), die einen vorderen Teil einer Fahrzeugkarosserie (23) abdeckt, wobei ein Kühlluftdurchlass (52) vorgesehen ist, der zwischen dem Motor (10) und dem Benzintank (7) verläuft, und ein hitzeabweisendes Bauteil (51) zum Unterteilen des Kühlluftdurchlass (52) in einen motorseitigen Kühlluftdurchlass (53) und einen tankseitigen Kühlluftdurchlasse (54), wobei ein vorderes Ende des hitzeabweisenden Bauteils (51) vor dem Lüfter (27) positioniert ist, **gekennzeichnet durch** ein Teilungselement (55) zum Untereilen eines Raumes, der zwischen einem oberen Enden des Lüfters (27) und einem oberen Abschnitt des Motors (10) vorgesehen ist, in obere und untere Abschnitte, und **dadurch** dass der motorseitige Kühlluftdurchlass (53) einen unteren Durchlass (56) aufweist, der unterhalb des Teilungselements (55) positioniert ist, und einen oberen Durchlass (57), der oberhalb des Teilungselements (55) positioniert ist.

2. Grätschsitzfahrzeug nach Anspruch 1, **dadurch gekennzeichnet, dass** der Kühlluftdurchlass (52), der zwischen dem Motor (10) und dem Benzintank (7) sich erstreckt, in einer Längsrichtung des Fahrzeugs angeordnet ist.

3. Grätschsitzfahrzeug nach Anspruch 1 oder 2, **dadurch gekennzeichnet, dass** die Fahrzeugkarosserieverkleidung (3) einen vorderen Teil der Fahrzeugkarosserie (23) abdeckt, der den Motor (10) umfasst.

4. Grätschsitzfahrzeug nach einem der Ansprüche 1 bis 3, **dadurch gekennzeichnet, dass** das hitzeabweisende Bauteil (51) einen oberen Abschnitt des Motors (10) abdeckt.

5. Grätschsitzfahrzeug nach einem der Ansprüche 1 bis 4, **gekennzeichnet durch** ein Paar linker und rechter Hauptschweinwerfer (11), die in einer zentralen Position in Querrichtung des Fahrzeugs an einem vorderen Ende der Fahrzeugkarosserieverkleidung (3) angeordnet sind.

6. Grätschsitzfahrzeug nach einem der Ansprüche 1 bis 5, **gekennzeichnet durch** Luftansaugöffnungen, die in einer vorderen Oberfläche der Fahrzeugkarosserieverkleidung (3) vorgesehen sind, wobei der tankseitige Kühllüftdurchlass (54) mit den Luftansaugöffnungen verbunden ist.

7. Grätschsitzfahrzeug nach den Ansprüchen 5 und 6, **dadurch gekennzeichnet, dass** die Luftansaugöffnungen erste Luftansaugöffnungen (61) umfassen, die auf einer rechten Seite des rechten Hauptscheinwerfers (11) und auf einer linken Seite des linken Hauptscheinwerfers (11) angeordnet sind.

8. Grätschsitzfahrzeug nach Anspruch 7, **dadurch gekennzeichnet, dass** die Hauptscheinwerfer (11) im Wesentlichen auf der gleichen Höhe der des Benzintanks (7) in Vertikalrichtung des Fahrzeugs angeordnet sind und obere und untere Kanten der ersten Luftansaugöffnungen (61) im Wesentlich auf gleicher Höhe mit den oberen und unteren Kanten der Hauptscheinwerfer (11) angeordnet sind.

9. Grätschsitzfahrzeug nach einem der Ansprüche 5 bis 8, **dadurch gekennzeichnet, dass** die Luftansaugöffnungen zweite Luftansaugöffnungen (65) aufweisen, die oberhalb des Hauptscheinwerfers (11) angeordnet sind.

10. Grätschsitzfahrzeug nach Anspruch 9, **dadurch gekennzeichnet, dass** die Fahrzeugkarosserieverkleidung (3) eine Frontverkleidung (13) aufweist und ein Ansaugrohr (64) in der Frontverkleidung (13) oberhalb der Hauptscheinwerfer (11) vorgesehen ist, wobei das Ansaugrohr (64) einen Luftstrom führt, der durch den Betrieb des Fahrzeugs erzeugt und durch zweite Luftansaugöffnungen (65) in die Frontverkleidung (13) eingebracht wird.

11. Grätschsitzfahrzeug nach einem der Ansprüche 7 bis 10, **dadurch gekennzeichnet, dass** ein Paar linker und rechter Tankschienen (42) vorgesehen sind, wobei der Benzintank (7) auf den Tankschienen angebracht ist, und wobei Luftansaugführungen (62), die von den ersten Luftansaugöffnungen rückwärtig verlaufen, an beiden Enden innerhalb der Fahrzeugkarosserieverkleidung (3) in Querrichtung des Fahrzeugs vorgesehen sind und rückwärtige Enden der Luftansaugführungen (62) sich in Richtung eines Freiraums erstrecken, um Kühlluft einzubringen, die sich zwischen den Tankschienen (42) und dem Benzintank (7) gebildet hat.

12. Grätschsitzfahrzeug nach einem der Ansprüche 1 bis 11, **dadurch gekennzeichnet, dass** ein Hauptrohr (41) und das Paar linker und rechter Tankschienen (42), die sich von dem Hauptrohr aus erstrecken, vorgesehen sind, wobei der Benzintank (7) auf den Tankschienen (42) befestigt ist und eine Kühlluftansaugöffnung (44), die sich durch die Tankschienen (42) in Längsrichtung der Fahrzeugkarosserie (23) hindurcherstreckt, in der Nähe eines Abschnitts der Tankschienen (42) ausgebildet ist, um mit dem Hauptrohr (41) verbunden zu werden.

## Revendications

1. Véhicule du type à enfourcher, comprenant un moteur (10), un réservoir de carburant (7) disposé au-dessus du moteur (10), un radiateur (27) qui est disposé devant le moteur (10), et un carénage (3) qui couvre une partie avant d'un corps de véhicule (23), étant précisé qu'il est prévu un passage d'air de refroidissement (52) qui s'étend entre le moteur (10) et le réservoir de carburant (7), et un élément de blocage de chaleur (51) pour diviser le passage d'air de refroidissement (52) en un passage d'air de refroidissement côté moteur (53) et un passage d'air côté réservoir (54), et qu'une extrémité avant de l'élément de blocage de chaleur (51) est placée au-dessus du radiateur (27),
**caractérisé par** un élément de séparation (55) pour diviser un espace entre une extrémité supérieure du radiateur (27) et une partie supérieure du moteur (10) en parties supérieure et inférieure, et en ce que le passage d'air de refroidissement côté moteur (53) comprend un passage inférieur (56) placé au-dessous de l'élément de séparation (55), et un passage supérieur (57) placé au-dessus de l'élément de séparation (55).

2. Véhicule du type à enfourcher selon la revendication 1, **caractérisé en ce que** le passage d'air de refroidissement (52) qui s'étend entre le moteur (10) et le réservoir de carburant (7) est disposé dans un sens avant-arrière du véhicule.

3. Véhicule du type à enfourcher selon la revendication 1 ou 2, **caractérisé en ce que** le carénage (3) couvre la partie avant du corps de véhicule (23), y compris le moteur (10).

4. Véhicule du type à enfourcher selon l'une des revendications 1 à 3, **caractérisé en ce que** l'élément de blocage de chaleur (51) couvre la partie supérieure du moteur (10).

5. Véhicule du type à enfourcher selon l'une des revendications 1 à 4, **caractérisé par** deux feux gauche et droit (11) qui sont disposés sur une partie centrale d'une extrémité avant du carénage (3) dans le sens de la largeur du véhicule.

6. Véhicule du type à enfourcher selon l'une des revendications 1 à 5, **caractérisé par** des orifices d'introduction d'air disposés sur une surface avant du carénage (3), étant précisé que le passage d'air de refroidissement côté réservoir de carburant (54) communique avec les orifices d'introduction d'air.

7. Véhicule du type à enfourcher selon les revendications 5 et 6, **caractérisé en ce que** les orifices d'introduction d'air comprennent des premiers orifices d'introduction d'air (61) qui sont ouverts sur le côté droit du feu avant (11) droit et sur le côté gauche du feu avant (11) gauche.

8. Véhicule du type à enfourcher selon la revendication 7, **caractérisé en ce que** les feux avant (11) sont placés globalement au même niveau que le réservoir de carburant (7), dans le sens de la hauteur du véhicule, et les bords supérieur et inférieur des premiers orifices d'introduction d'air (61) se trouvent globalement au même endroit que les bords supérieur et inférieur des feux avant (11).

9. Véhicule du type à enfourcher selon les revendications 5 à 8, **caractérisé en ce que** les orifices d'introduction d'air comprennent des seconds orifices d'introduction d'air (65) qui sont disposés au-dessus des feux avant (11).

10. Véhicule du type à enfourcher selon la revendication 9, **caractérisé en ce que** le carénage (3) comprend un capot avant (13), et un conduit d'introduction d'air (64) destiné à guider l'écoulement d'air produit par le véhicule qui roule et introduit par les seconds orifices d'introduction d'air (65) dans le capot avant (13) est prévu sur le capot avant (13), au-dessus des feux avant (11).

11. Véhicule du type à enfourcher selon l'une des revendications 7 à 10, **caractérisé en ce que** deux rails de réservoir gauche et droit (42) sont prévus, le réservoir de carburant (7) est monté sur les rails (42), des trajectoires d'introduction d'air (62) qui s'étendent vers l'arrière à partir des premiers orifices d'introduction d'air (61) sont prévues aux deux extrémités, dans le sens de la largeur du véhicule, à l'intérieur du carénage (3), et les extrémités arrière des trajectoires d'introduction d'air (62) s'étendent vers un espace (52) pour l'introduction d'air de refroidissement formé entre les rails pour réservoir (42) et le réservoir de carburant (7).

12. Véhicule du type à enfourcher selon l'une des revendications 1 à 11, **caractérisé en ce qu'**il est prévu un tube avant (41) et deux rails pour réservoir gauche et droit (42) qui partent du tube avant (41), le réservoir de carburant (7) est monté sur les rails (42), et un trou d'introduction d'air de refroidissement (44) qui traverse les rails (42) dans un sens avant-arrière du corps de véhicule (23) est formé près d'une partie des rails de réservoir (42) à relier au tube avant (41).
